# EUROPEAN PATENT APPLICATION

(11) **EP 3 699 422 A1**
(43) Date of publication of application: **26.08.2020**
(21) Application number: 20159108.8
(22) Date of filing: 24.02.2020
(51) Int. Cl.: F03G 7/06, F02G 1/043, F04B 9/08

(54) **A THERMAL APPARATUS**

(30) Priority: 22.02.2019 RU 2019105071
(71) Applicant: Arrival Limited, London W14 8TS (GB)
(72) Inventor: BIKMUKHAMETOV, Alexey, London, W14 8TS (GB)
(74) Representative: Jarrett, Daniel Phillip

(57) **Abstract**

An apparatus is presented which includes an enclosure formed at least by an elastic membrane, a first region and a second region. The apparatus further includes a displacer disposed within the enclosure, arranged to move with the elastic membrane through a plurality of positions and to be substantially thermally insulating. The apparatus further includes a fluid within the enclosure. The first region is thermally connectable to a first external thermal source and arranged to transfer heat from the first external thermal source to an interior of the enclosure. The second region is thermally connectable to a second external thermal source and arranged to transfer heat from the interior of the enclosure to the second external thermal source, a temperature of the second external thermal source being lower than a temperature of the first external thermal source. The elastic membrane and the displacer are arranged to move such that a volume of the fluid exposed to the first region is decreased in response to an increase of a temperature of the fluid and such that a volume of the fluid exposed to the first region is increased in response to a decrease of the temperature of the fluid.

## Description

### Technical Field

This specification relates to a thermal apparatus, in particular, a thermal membrane machine which uses an elastic membrane.

### Background

Converting thermal energy into another form of energy raises considerable challenges. In general, known devices to convert thermal energy into electrical energy are not efficient. For example, Peltier elements convert thermal energy into electrical energy. However, Peltier elements have a low efficiency of conversion. Known devices to convert thermal energy into mechanical energy often have complex design. A Stirling engine is known be most efficient in converting thermal energy to mechanical energy. However, the Stirling engine has a complex mechanical construction, requiring a large number of moving parts, which run against one another to cause friction. As the Stirling engine is heated up during operation, the moving parts may be deformed, which can lead to malfunction of the engine. In general, a Stirling engine may often be complex and expensive because it may require maintenance.

### Summary

This specification provides an apparatus comprising an enclosure formed at least by an elastic membrane, a first region and a second region. The apparatus further comprises a displacer disposed within the enclosure, arranged to move with the elastic membrane through a plurality of positions and to be substantially thermally insulating. The apparatus further comprises a fluid within the enclosure. The first region is thermally connectable to a first external thermal source and arranged to transfer heat from the first external thermal source to an interior of the enclosure. The second region is thermally connectable to a second external thermal source and arranged to transfer heat from the interior of the enclosure to the second external thermal source, a temperature of the second external thermal source being lower than a temperature of the first external thermal source. The elastic membrane and the displacer are arranged to move such that a volume of the fluid exposed to the first region is decreased in response to an increase of a temperature of the fluid and such that a volume of the fluid exposed to the first region is increased in response to a decrease of the temperature of the fluid.

The elastic membrane may be arranged to take a shape such that a volume of the enclosure is decreased in response to the decrease of the temperature of the fluid, and such that the volume of the enclosure is increased in response to the increase of the temperature of the fluid.

The displacer may comprise a planar portion and a connecting portion. The planar portion may be arranged to substantially cover a transverse cross section of the enclosure, and the connecting portion may be arranged to attach the planar portion to a portion of the elastic membrane such that the planar portion moves with the portion of the elastic membrane.

The elastic membrane and the first region may be arranged to face a first side of the planar portion and the second region is arranged to face a second side of the planar portion, such that when the volume of the fluid is increased, the planar portion is closer to the first region than to the second region, and when the volume of the fluid is decreased, the planar portion is closer to the second region than to the first region.

The apparatus may comprise one or more additional elastic membranes, and wherein the displacer comprises one or more additional connecting portions for respective ones of the additional elastic membranes.

This specification provides an electric generator, comprising an apparatus described above and a coil disposed on the outside of the enclosure and connectable to an electric load and a magnet attached to the displacer, wherein the enclosure is arranged such that the magnet is inserted into the coil at least at one of the positions.

The magnet may be attached to the planar portion of the displacer, and the enclosure may further comprise a protrusion on the second region and the coil is wound around the protrusion such that at the one of the positions, the magnet is inserted into the protrusion.

This specification provides a hydraulic pump, comprising an apparatus described above and a first one-way valve, a second one-way valve and a hydraulic enclosure disposed outside the enclosure. A surface of the hydraulic enclosure is formed at least partly by the elastic membrane such that a volume of the hydraulic enclosure changes with movement of the elastic membrane. An output of the first one-way valve is connected to a first port of a three-way connector, and a second port of the three-way connector is connected to an input of the second one-way valve. A third port of the three-way connector is connected to the hydraulic enclosure, and wherein an input of the first one-way valve is connectable to a suction side reservoir and an output of the second one-way valve is connectable to a discharge side reservoir.

This specification provides an engine, comprising an apparatus described above, a wheel arranged to rotate around a shaft, a crank rotatably attached to a portion of the elastic membrane via a first pivot and rotatably attached to the wheel via a second pivot.

The elastic membrane may be arranged to take a predetermined number of shapes, such that the elastic membrane provides a force to maintain one of the predetermined shapes against the decrease or the increase of the temperature of the fluid.

The one or more additional elastic membranes may be arranged to take the predetermined number of shapes, such that the one or more additional elastic membranes provide a force to maintain one of the predetermined shapes against the decrease or the increase of the temperature of the fluid.

The elastic membrane may be arranged to stretch and contract continuously in response to the decrease or the increase of the temperature of the fluid, such that the elastic membrane provides a restoring force to return to an unstretched state of the elastic membrane.

The one or more additional elastic membranes may be arranged to stretch and contract continuously in response to the decrease or the increase of the temperature of the fluid, such that the one or more additional elastic membranes provide a restoring force to return to an unstretched state of the one or more elastic membranes.

The elastic membrane may comprise materials such as polymer, plastic, rubber, metal or any combination.

The fluid may comprise a gas.

The fluid may comprise a liquid.

The enclosure may be substantially full of the liquid when the volume of the fluid is minimised.

The enclosure may be partially filled with liquid when the volume of the fluid is minimised.

The fluid maybe under a two-phase condition.

The first region may comprise a reception region arranged to be thermally contacted to a thermal bridge and arranged to transfer heat from the thermal bridge to the interior of the enclosure and a thermal bridge arranged to thermally connect the reception surface and the first external thermal source.

### Brief Description of the Drawings

Embodiments of the present invention will now be described, by way of example only, with reference to the accompanying drawings, in which:
Figure 1a, 1b and 1c illustrate a first embodiment of a thermal membrane machine.
Figure 2 illustrates a second embodiment of a thermal membrane machine.
Figures 3a and 3b illustrate a third embodiment of a thermal membrane machine.
Figure 4 illustrates a phase diagram of a real gas-liquid system and a two-phase condition.
Figures 5a and 5b describes an example of a thermal membrane machine which includes four elastic membranes.
Figure 6 illustrates an example of a thermal membrane machine in which an electric generator is installed.
Figure 7 illustrates an example of a thermal membrane machine in which a hydraulic pump is installed.
Figure 8 illustrates an example of a thermal membrane machine in which an engine is installed.

### Detailed Description

This specification provides a device analogous to a Stirling engine. Since a key component of the device is a membrane, the device will be referred to as a thermal membrane machine.

The thermal membrane machine described herein may adopt the advantages of a Stirling engine but the design of the thermal membrane machine may be as simplified as possible by reducing the total number of parts, especially moving parts, to minimise friction between parts. By simplifying the design, the efficiency may be improved, which in turn leads to the reduction of the volume and weight of the device.

The thermal membrane machine may use the heat released by other devices such as an engine of vehicles. The thermal membrane machine may cool itself during operation.

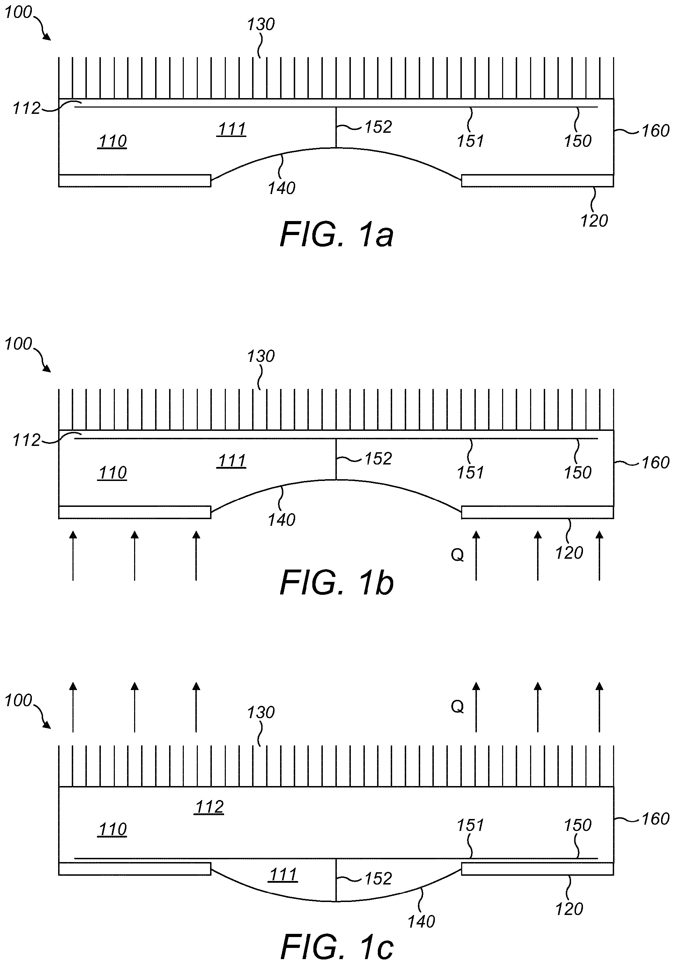

Figures 1 illustrates a first embodiment of a thermal membrane machine 100. The thermal membrane machine 100 includes an enclosure 110 containing one or more types of fluid. The fluid of the first embodiment of the thermal membrane machine is gas. The enclosure 110 may be delimited by a hot surface 120, a cold surface 130, an elastic membrane 140 and one or more of heat-insulating walls 160. The enclosure 110 forms an airtight vessel defined by these surfaces such that the gas is completely confined within the enclosure 110. However, the volume of the enclosure 110 may vary depending on the temperature of the fluid as the elastic membrane 140 stretches, as will be explained in more detail later. Since the fluid is confined within the enclosure 110, the thermal membrane machine 100 in this specification can be classified as a closed-type thermal engine. The 'hot surface' referred to above and mentioned throughout this specification is a thermally warmer surface than the 'cold surface', whilst the 'cold surface' referred to above and mentioned throughout the specification is a thermally cooler surface than the 'hot surface'.

The hot surface 120 may be a heat source which provides thermal energy. This thermal energy may be generated during the operation of a vehicle or an engine which would be normally not utilised. With the thermal membrane engine 100, it is desired that this thermal energy is converted into mechanical energy. For example, the hot surface 120 of the thermal membrane engine 100 may be in thermal contact with the hot surface of an engine of a vehicle such that heat generated from the engine can be used as a thermal energy source.

Although the amount of heat from a thermal source in contact with the hot surface 120 may fluctuate in reality, an ideal hot surface 120 will maintain a constant temperature. It is well known to maintain a substantially constant temperature of a surface in thermal contact with a fluctuating thermal source. For example, a bath of fluid whose boiling point is near the temperature of the heat source may be disposed between the heat source and the hot surface 120. Due to the latent heat near the boiling point, the bath will maintain a substantially constant temperature regardless of the amount of heat applied to the bath. The example of ways to maintain a constant temperature surface is not limited to this example.

In this specification, for the purposes of explanation, the examples of the hot surface 120 maintain a substantially constant temperature. Also, the hot surface 120 and the cold surface 130 are described as maintaining a substantially constant temperature gradient during the operation of the machine. In other words, in the examples discussed, the temperatures are not substantially affected by the movement of the fluid within the enclosure 110.

The cold surface 130 may be a heat sink, where heat originating from the hot surface 120 can be absorbed. The temperature of the cold surface 130 is lower than that of the temperature of the hot surface 120. As in the case of the hot surface 120, for the purposes of illustration, the temperature of the cold surface 130 ideally is described below as being substantially constant.

The cold surface 130 may be provided by a body having a large thermal capacity such as a metal block with a size big enough such that the heat transferred from the hot surface does not significantly alter the surface temperature. Alternatively, the cold surface 130 may be a surface which is cooled by active means such as water cooling or cooled by any passive cooling means such as cooling fins. The cold surface 130 of the first embodiment shown in Figure 1a is provided by cooling fins. However, the implementations of the hot surface 120 and the cold surface 130 are not limited to these examples.

The elastic membrane 140 may comprise an elastic material capable of changing its form depending on the volume of the gas within the enclosure 110.

The elastic membrane 140 may comprise any material which is flexible enough to expand according to a change of the volume of the gas within the enclosure 110 but strong enough not to break and to endure the temperature change through many cycles.

The elastic membrane 140 maybe made of an elastic material. The elastic membrane 140 may be made of more than one type of material. For example, the periphery of the elastic membrane 140 may be elastic while the central part may be non-elastic. The elastic membrane 140 may comprise materials such as polyer, plastic, rubber, metal or any combination, although the choice of material is not limited to these examples.

The elastic membrane 140 maybe arranged to expand and contract continuously depending on the volume of the gas within the enclosure 110. In this case, the elastic membrane 140 provides a restoring force to the thermal engine. In other words, whenever the elastic membrane 140 expands inwards into the enclosure 110 or outwards from the enclosure 110, the elastic membrane 140 will be subject to force to return to the initial state due to its elasticity. When the gas expands, due to the elevated temperature of the gas, the elastic membrane 140 may expand outwards from the enclosure 110. When the volume of the gas decreases, the elastic membrane 140 may contract inwards into the enclosure 110.

Alternatively, the elastic membrane 140 may not expand and contract continuously depending on the volume of the gas, but be arranged to assume a predetermined number of stable shapes. For example, the elastic membrane 140 may be arranged to be bistable such that it assumes two forms, convex and concave. The elastic membrane 140 may maintain a concave form, in which the elastic membrane 140 is bent towards the interior of the enclosure 110, until the volume of the gas within the enclosure 110 reaches a certain threshold. Once the volume of the gas within the enclosure 110 exceeds the threshold, the elastic membrane 140 may assume the convex form, in which the elastic membrane 140 is bent towards the exterior of the enclosure 110. In this case, the elastic membrane 140 does not provide a restoring force but provides a force to maintain its current shape, which is to yield only under pressure above a predetermined threshold and to a predetermined direction.

For ease of explanation of the concept, the examples discussed in this specification assume that the volume of the gas is dependent only on the temperature of the gas. However, in reality, the gas maybe compressible, in which case the volume of the gas will be dependent on other parameters than the temperature of the gas, such as the pressure exerted on the thermal membrane machine 100 or the pressure exerted on the gas within the enclosure 110 by the force provided by the elastic membrane 140.

However, this possible effect is minor and does not significantly affect the operation of the machine.

When both the hot surface 120 and the cold surface 130 are disengaged from a thermal source and a cooling source, respectively, and left at an ambient condition, the volume of the gas within the enclosure 110 may adopt the room temperature in which the thermal membrane engine 100 is sited or otherwise the temperature of the surroundings of the thermal membrane engine 100.

In the first embodiment of the thermal membrane machine 100 shown in Figures 1a, 1b and 1c, the elastic membrane 140 is disposed over an aperture formed in the hot surface 120. However, the location of the elastic membrane 140 is not limited to this example. As long as the pressure induced by the change of the volume of the fluid inside the enclosure can be exerted on the elastic membrane, the position of the elastic membrane 140 can be chosen appropriately as long as it occupies a surface of the enclosure 110.

The thermal membrane machine 100 further comprises a thermal barrier 150.

The thermal barrier 150 may comprise a planar portion 151 which maybe shaped substantially planar such as in the shape of a disk or a plate, or in a shape that is as wide as the cross section of the enclosure 151 such that the space of the enclosure 110 is substantially divided into two spaces by the planar portion 151.

The planar portion 151 may be arranged such that the lateral extent of the planar portion 151 covers most of a cross section of the enclosure 110. The connecting portion 152 maybe arranged such that two planes of the planar portion 151 face the hot surface 120 and the cold surface 130, respectively.

The presence of the thermal barrier 150, in particular planar portion 151, within the enclosure 110 may substantially divide the space of the enclosure 110 into two spaces: one facing the hot surface 120, the other the cold surface 130. The space within the enclosure 110 between a face of the planar portion 151 and the hot surface 120 will be referred to below as a hot space 111. The space within the enclosure 110 between the other face of the planar portion and the cold surface 130 will be referred to below as a cold space 112. The 'hot space' is a thermally warmer region of the enclosure than the 'cold space', whilst the 'cold space' is a thermally cooler region of the enclosure than the 'hot space'. The hot space 111 and the cold space 112 do not correspond to any airtight, confined spaces within the enclosure 110. The hot space 111 and the cold space 112 are merely to define approximately the two disparate spaces within the enclosure 110, for the convenience of the explanation of the concept.

The thermal barrier 150, or at least the planar portion 151 may comprises a material with a low thermal conductivity such that it can maintain a temperature difference on either side of the planar portion 151, namely between the hot space 111 and the cold space 112 for a sufficient amount of time.

The thermal barrier 150 further comprises a connecting portion 152, which is arranged to connect the planar portion 151 to the elastic membrane 140. Due to the connecting portion 152, the thermal barrier 150 may be arranged to move together with the elastic membrane 140. When the elastic membrane 140 moves, the thermal barrier 150 also moves according to the movement of the elastic membrane 140.

In particular, the whole of thermal barrier 150 may be arranged to move with the portion of the elastic membrane the connecting portion 152 is connected to. The amplitude of the movement may vary depending on the specific location within the elastic membrane 140 the connecting portion 152 is attached. Therefore, the relative movement of the thermal barrier 150 with respect to the elastic membrane 140 is determined by the design of the connecting portion 152.

Since the role of the connecting portion 152 is to render the planar portion 151 to move with the elastic membrane 140, the connecting portion 152 may be designed to occupy a minimal volume within the enclosure 110 while serving the purpose of securing the thermal barrier 150 to the elastic membrane 140.

In order for the movement of the thermal barrier 150 to substantially follow but not to hinder the movement of the elastic membrane 150 at a desired speed of operation, the material of the thermal barrier 150 may be chosen to be as lightweight as possible, as long as the required low thermal conductivity is provided. The examples of the material of the thermal barrier 150 may include but not necessarily be limited to plastic and ceramics. The thermal barrier 150 may comprise multilayer materials or thermal insulation coating.

The purpose of the thermal barrier 150 is analogous to that of a displacer of a Stirling engine. In other words, the thermal barrier 150 acts as a displacer which determines respective portions of the fluid within the enclosure 110 to be exposed to the hot surface 120 and the cold surface 130, respectively, or equivalently determines the volume of the hot space 111 and the cold space 112 at any given moment of the cycle of operation of the thermal membrane machine 100.

In an ideal case, thermal cross talk between the cold surface 120 and the hot surface 130 is minimised. This maybe the case if the planar portion 151 of the thermal barrier 150 is a perfect thermal insulator and the cross section of the enclosure 110 is such that it completely blocked by the planar portion 151 during operation.

However, in order to allow the flow of fluid between the hot space 111 and the cold space 112, a finite gap between the periphery of the planar portion 151 and the heat insulating wall 160 must be provided. As the position of the planar portion 151 of the thermal barrier 150 changes, the volumes of the hot space 111 and the cold space 112 also change and the fluid or the gas is redistributed between the hot space 111 and the cold space 112 within the enclosure 110 during operation.

The planar portion 151 and the connecting portion 152 may be designed such that the periphery of the planar portion 151 does not touch the heat-insulating wall 160 at any time during operation.

The size of the gap between the periphery of the planar portion 151 and the heat insulating wall 160 should be carefully chosen to maximise the efficiency of the thermal membrane machine 100.

In an ideal case, the hot space 111 is only exposed to the hot surface 120 and the cold space 112 is only exposed to the cold surface 130. Also in an ideal case, the hot surface 120 and the cold surface are thermally isolated, and the hot space 111 and the cold space 112 maintains a stable and constant temperature gradient.

Therefore, the size of the planar portion 151 is such that the thermal barrier 150 largely blocks the radiative cross talk between the hot surface 120 and the cold surface 130.

However, the gap between the periphery of the planar portion 151 and the heat insulating wall 160 should be large enough such that the gas within the hot space 111 and the cold space 112 can be redistributed as the thermal barrier 150 moves without causing significant friction or compression of the gas.

If the gap between the periphery of the planar portion 151 and the heat-insulating wall 160 is too large, the thermal barrier 150 may be able to move without undergoing significant friction. However, the temperature difference between the hot space 111 and the cold space 112 will be harder to maintain. This is because a larger gap formed between the wall 160 and the thermal barrier 150 will allow more heat transfer between the hot surface 120 and the cold surface 130 both via radiation and convection.

Therefore, the thermal efficiency of the system decreases and a higher temperature difference between the hot surface 120 and the cold surface 130 will be required to achieve the same power in the mechanical motion.

As the size of the gap becomes smaller, the fluid or gas inside will undergo increasingly more dynamic resistance in being rearranged between the hot space 111 and the cold space 112. Therefore, the fluid velocity within the enclosure 110 will be limited, which affects the operation frequency.

Therefore, the lateral dimension of the planar portion 151 of the thermal barrier 150 may be determined to maximise the efficiency of the thermal membrane machine 100. A clear temperature difference is to be maintained on both sides of the planar portion 151 within the enclosure 110, namely hot space 111 and cold space 112, while minimising a drag force due to friction or compression from the movement of the planar portion 151 of the thermal barrier 150.

Therefore, the size of the gap should be determined in view of the size of the hot surface 120 and the cold surface 130, the volume of the gas, the geometry of the enclosure 110 and the thermal barrier 150, among other parameters.

The remaining thermal cross talk between the hot surface 120 and the cold surface 130 will be mainly due to convection of the fluid and the radiative cross talk between the hot surface 120 and the cold surface 130 via the gap between the periphery of the enclosure 110 and the planar portion 151 is ideally minimised.

Figures 1b and 1c illustrate the principle of operation of the thermal membrane machine 100.

Figure 1b shows a snapshot in time during the cycle of operation of the thermal membrane machine 100. At this specific moment of the cycle, the total volume of the gas within the enclosure 110 is such that the elastic membrane 140 is stretched inwards into the enclosure 210. Since the elastic membrane 140 is stretched inwards, the thermal barrier 150 is positioned closer to the cold surface 130 than to the hot surface 120. Since the thermal barrier 150 largely blocks the heat conduction between the hot space 111 and the cold space 112, a larger volume of gas within the enclosure 110 is exposed to the hot surface 120. Therefore, the volume of cold space 112 is substantially smaller than the volume of the hot space 111.

As explained above, there can be two different ways in which the elastic membrane 140 operates. The elastic membrane 140 may be arranged to stretch and contract continuously according to the volume of the gas within the enclosure 110. Alternatively, the elastic membrane 140 may be arranged to assume a predetermined number of shape, for example, bistable in convex and concave shapes.

In case the elastic membrane is arranged to stretch and contract continuously, the elastic membrane 140 and the thermal barrier 150 are arranged such that the movement speed of the thermal barrier 150 is comparable or slower than the timescale of thermalisation. In this specification, by thermalisation, it is meant that the gas in thermal contact with the hot surface 120 or the cold surface 130 was heated or cooled by the hot surface or the cold surface to reach an equilibrium temperature at or near the temperature of the hot surface 120 or the cold surface 130.

At the specific moment illustrated in Figure 1b, the gas inside the hot space 111 is thermalised by the hot surface 120 and the gas inside the cold space 112 is thermalised by the cold surface 130.

Since the volume of the hot space 111 is substantially larger than the cold space 112, the overall gas inside the enclosure 110 may be effectively heated due to the thermal energy provided by the hot surface 120. This leads to overall increase of the temperature of the gas within the enclosure 110 shortly after the specific point in time depicted in Figure 1b. Consequently, overall volume of the gas within the enclosure 110 will increase, shortly after the point in time illustrated in Figure 1b. This will cause the elastic membrane 140 to expand outwards and causes the thermal barrier 150 to move away from the cold surface 130 and towards the hot surface 120.

The timescale of thermalisation of the hot space 111 maybe adjusted such that the expansion or contraction of the gas within the hot space 111 enhances the restoring force provided by the elastic membrane 140. Therefore, the timescale of thermalisation maybe arranged considering the movement speed of the thermal barrier 150, or vice versa.

If the elastic membrane 140 and the thermal barrier 150 move faster than the timescale of thermalisation, at the timepoint described in Figure 1b, the gas in the hot space 111 will not have been sufficiently thermalised when the elastic membrane 140 and the thermal barrier 150 will move outwards. Since the gas does not expand in such a way that the movement of the elastic membrane 140 and the thermal barrier 150 is enhanced, the volume of the gas is large enough to accommodate the movement of the thermal barrier 150 outwards. Therefore, the motion of the elastic membrane 140 and the thermal barrier 150 will experience friction. This will lead to gradual dissipation of the motion of the elastic membrane 140 and the thermal barrier 150.

The timescale of thermalisation of the hot space 111 maybe determined by the temperature of the hot space 111, the volume of the hot space 111, the temperature of the hot surface 120, the area of the hot surface 120, and the type of fluid within the enclosure.

The frequency or timescale of operation will be discussed in more detail later.

In case the elastic membrane 140 is arranged to assume a predetermined number of forms, for example, two forms. Figure 1b depicts a snapshot in time where the elastic membrane 140 is in one of the bistable forms, i.e. a concave form. In its concave form, the elastic membrane 140 is bent towards the interior of the enclosure 110 and the elastic membrane 140 provides a force to maintain this shape. Therefore, the volume of the enclosure 110 will be maintained until the temperature of the gas within the enclosure 110 exceeds a certain threshold.

Therefore, even if the gas in the hot space 111 is not sufficiently thermalised at the moment depicted in Figure 1b, the elastic membrane 140 and the thermal barrier 150 will maintain its current position until the hot space 111 is sufficiently thermalised and the overall volume of the gas within the enclosure 110 exceeds a certain threshold.

Figure 1c shows another snapshot in time during the cycle of operation of the thermal membrane machine 100. For example, the point in time depicted by Figure 1c may be subsequent to the point in time depicted by Figure 1b.

As explained above, the elastic membrane 140 may be arranged to stretch and contract continuously according to the volume of the gas within the enclosure 110. Alternatively, the elastic membrane 140 may be arranged to assume a predetermined number of shape, for example, bistable in convex and concave shapes.

In case the elastic membrane 140 is arranged to stretch and contract continuously, as explained in Figure 1b, as the overall volume of the gas within the enclosure 110 expands, the elastic membrane 140 is stretched outwards from the enclosure 110. As the elastic membrane 140 moves away from the cold surface 130, the thermal barrier 150 also moves along with the elastic membrane 140 and away from the cold surface 130.

Importantly, the thermal barrier 150 moves until the volume of the cold space 112 is substantially larger than the volume of the hot space 111. Therefore, the heat held by the gas within the cold space 112 of the enclosure 110 is lost by being in contact with the cold surface 130. As a result, the temperature of the gas within the cold space 112 will decrease as the gas within the cold space 112 thermalises with the cold surface 130, shortly after the time point described by Figure 1c.

As explained in Figure 1b, the thermal barrier 150 is arranged such that the movement speed of the thermal barrier 150 is comparable or slower than the timescale of thermalisation. Therefore, at this specific moment, the gas inside the cold space 112 is about to be thermalised by being cooled due to the cold surface 130.

This will lead to overall decrease of the temperature of the gas within the enclosure 110 shortly after the specific point in time depicted in Figure 1c. Overall volume of the gas within the enclosure 110 decreases and this causes the elastic membrane 140 to stretch inwards and causes the thermal barrier 150 to move towards the cold surface 130, which brings the system back to the time point described in Figure 1b.

The timescale of thermalisation of the cold space 112 may be adjusted such that the expansion or contraction of the gas within the cold space 112 enhances the restoring force provided by the elastic membrane 140. Therefore, the timescale of thermalisation maybe arranged considering the movement speed of the thermal barrier 150, or vice versa.

If the gas in the hot space 112 is not sufficiently thermalised at the moment depicted in Figure 1c, the elastic membrane 140 and the thermal barrier 150 will move inwards before the cold space 112 is thermalised. Since the gas did not contract such that the volume of the gas is small enough to accommodate the movement of the thermal barrier 150 inwards, the motion of the elastic membrane 140 and the thermal barrier 150 will experience friction. This will lead to gradual dissipation of the motion of the elastic membrane 140 and the thermal barrier 150.

The timescale of thermalisation of the cold space 112 may be determined by the temperature of the cold space 112, the volume of the cold space 112, the temperature of the cold surface 130, the area of the cold surface 130, and the type of fluid within the enclosure.

The frequency or timescale of operation will be discussed in more detail later.

In case the elastic membrane 140 is arranged to assume a predetermined number of forms, Figure 1c depicts a snapshot in time where the elastic membrane 140 is in one of the bistable forms, i.e. a convex form. The elastic membrane 140 is bent towards the exterior of the enclosure 110 and the elastic membrane 140 provides a force to maintain this shape, therefore the volume of the enclosure 110, until the temperature of the gas within the enclosure 110 goes below a predetermined threshold.

Therefore, when the gas in the cold space 112 is not sufficiently thermalised, the elastic membrane 140 and the thermal barrier 150 will maintain its current position, as described in Figure 1c, until the cold space 112 is sufficiently thermalised and the overall volume of the gas within the enclosure 110 goes below a certain threshold.

Thermal membrane machine 100 operates as the processes described in Figures 1b and 1c are repeated if the temperature of the hot surface 120 and the cold surface 130 are set as designed.

The elastic membrane 140 and the thermal barrier 150 may be put into motion voluntarily once the hot surface 120 and the cold surface 130 reach desired temperatures. Alternatively, once the temperatures of the hot surface 120 and the cold surface 130 are set as desired, an initial push of one or both of the elastic membrane 140 and the thermal barrier may be required.

The frequency of operation is defined to be the number of cycles completed within unit time. A cycle is one round trip of motion made by the elastic membrane 140 and the thermal barrier 150, as illustrated in Figures 1b and ic.

Therefore, the frequency of operation relates to the speed of movement of the elastic membrane 140 and the thermal barrier 150.

As discussed above, the frequency of operation is determined in view of the timescale of thermalisation of the hot space 111 and the cold space 112. The frequency of operation should also be determined considering the weight and drag force experienced by the elastic membrane 140 and the thermal barrier 150. The frequency of operation should be determined such that the motion of the elastic membrane 140 and the thermal barrier 150 can be sustained, not dissipated.

Therefore, the frequency of operation may be determined by one or more of the following parameters: the temperature difference between the hot surface 120 and the cold surface 130, a thermal capacity of the gas, a elasticity of the elastic membrane 140, the viscous force felt by the thermal barrier within the enclosure 110, the dimensions of the enclosure 110 and the thermal barrier 150.

In case the elastic membrane 140 is arranged to expand and stretch continuously, the thermal membrane machine 100 may reach an equilibrium point and not produce mechanical motion as intended. For example, when the frequency of operation is set to be too low and the weight of the thermal barrier 150 is too high, the movement of the elastic membrane 140 may slowly decay, eventually to a halt. In this case, the elastic membrane 140 and the thermal barrier 150 may arrive at a position where the flow of the fluid around the enclosure 110 is stabilised.

Therefore, in order to prevent thermal equilibrium by convection of the fluid within the enclosure 210, the frequency of operation may be arranged to fall into a range from Hz to KHz because the problem of thermal crosstalk via convection between the hot surface 120 and the cold surface 130 via the fluid in the enclosure 110 may be minimised.

In case the elastic membrane 140 is arranged to assume a predetermined number of forms, such fading of the thermal membrane machine 100 by reaching a thermal equilibrium may be mitigated.

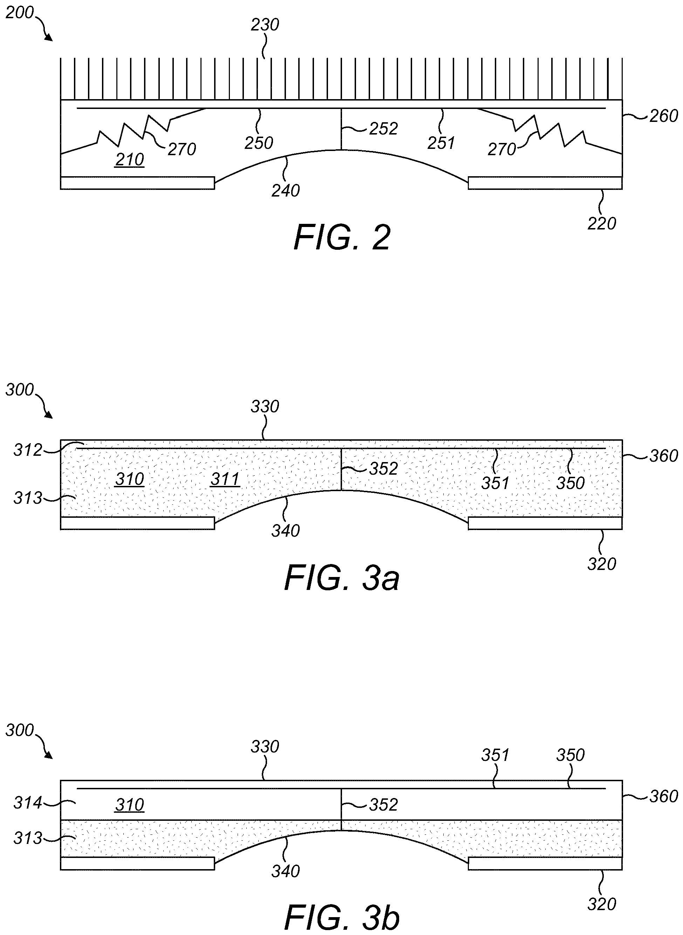

Figure 2 shows a thermal membrane engine 200, which comprises a hot surface 220, a cold surface 230, an elastic membrane 240, a thermal barrier 250 including a planar portion 251 and a connecting portion 252, and a heat-insulating wall 260. The hot surface 220, the cold surface 230, the elastic membrane 240 and the heat-insulating wall 260 form an enclosure 210, which is an airtight vessel containing gas. These elements are identical or substantially similar to those described in Figures 1a, 1b and 1c.

The thermal membrane engine 200 depicted in Figure 2 additionally comprises a spring 270. Figure 2 shows that there are two springs 270 and that one end of the respective springs 270 is secured to the planar portion 251 and the other end is secured to the heat-insulating wall 270.

In case the elastic membrane 240 is arranged to expand and contract continuously, the springs 270 are included to modify and adjust the restoring force of the elastic membrane 240.

For example, if the springs 270 are in a stretched state when the elastic membrane 240 is bent inwards into the enclosure 210 and if the springs 270 are in a compressed state when the elastic membrane 240 is bent outwards from the enclosure 210, the springs 270 provide a bias to the elastic membrane 240 such that the elastic membrane 240 exhibits a stronger restoring force.

Therefore, the springs 270 may be used to adjust the restoring force of the elastic membrane 240.

For another example, if the springs 270 are in an unstretched state when the elastic membrane 240 is bent inwards into the enclosure 210 and if the springs 270 are in a compressed state when the elastic membrane 240 is bent outwards from the enclosure 210, the springs 270 provide a bias to the elastic membrane 240 such that the elastic membrane 240 exhibits a stronger restoring force only when the elastic membrane 240 is bent outwards from the enclosure 210.

Therefore, the springs 270 may be used for introducing asymmetry in the way the elastic membrane 240 provides the restoring force.

In case the elastic membrane 240 is arranged to assume a predetermined number of forms, for example, to be bistable, the springs 270 are included to modify and adjust the threshold in movement of the elastic membrane 240.

For example, if the springs 270 are in a stretched state when the elastic membrane 240 is bent inwards into the enclosure 210 and if the springs 270 are arranged such that the springs 270 are in a compressed state when the elastic membrane 240 is bent outwards from the enclosure 210, the springs 270 provide a bias to the elastic membrane 240 such that the threshold is lowered for the elastic membrane 240 to move from a concave state and vice versa.

Therefore, the springs 270 may be used to adjust the threshold of movements of the elastic membrane 240.

The example in Figure 2 shows that the springs 270 are secured on the planar portion 251 of the thermal barrier 250 and on the thermal-insulating wall 260. However, the arrangement of the springs 270, the number of springs 270 and the positions of the springs 270 are not limited to these examples.

In the example of Figure 2, the springs 270 are depicted to be in a helical spring form. However, the exact form of the spring is not limited to this example. Any resilient material may be used in place of the springs 270. The resilient means may be installed within the enclosure 210 such that the behaviour of the elastic membrane 240 such as the restoring force of the elastic membrane 240 or the threshold for the shape of the elastic membrane 240 to change, can be modified and adjusted. Therefore, in this specification, the spring 270 is understood to be any resilient means to provide elasticity.

The characteristic of the springs 270 may be adjusted to control the overall elasticity or stiffness of the elastic membrane 240, for example, by varying the dimensions and stiffness of the springs 270. The behaviour of the elastic membrane 240 may also be controlled by the total numbers of the springs 270 and the locations of the springs 270 with respect to the thermal barrier 250.

Figure 3a shows a thermal membrane engine 300, which comprises a hot surface 320, a cold surface 330, an elastic membrane 340, a thermal barrier 350 including a planar portion 351 and a connecting portion 352, and a heat-insulating wall 360. The hot surface 320, the cold surface 330, the elastic membrane 340 and the heat-insulating wall 360 form an enclosure 310, which is an airtight vessel. These elements are identical to those described with respect to, and illustrated in, Figures 1a, 1b, 1c and 2.

The thermal membrane engine 100, 200 described in Figures 1a, 1b, 1c and 2 use gas as a working fluid. In this embodiment, the enclosure 310 of the thermal membrane engine 300 contains a working fluid 313 and the working fluid 313 may comprise at least partially liquid.

The working fluid 313 may be a single liquid or a combination of more than one type of liquids. Alternatively, the working fluid 313 may be the combination of one or more types of liquids and one or more types of gas. However, at least one species of the gas within the enclosure 310 is generated from corresponding liquid, also within the enclosure 310, by boiling the liquid.

In the example of Figure 3a, the elastic membrane 340 is bent inwards into the enclosure 310. At this state of the elastic membrane 340, the enclosure 310 is completely filled with liquid and the therefore thermal barrier 350 is immersed within the liquid. However, it is not essential for the operation of the thermal membrane machine 300 that the enclosure 310 is completely filled with liquid when the elastic membrane 340 is bent inwards into the enclosure. The enclosure 310 may be only partially filled with liquid at any point of the operation, such that the rest of the space within the enclosure 310 is filled with gas.

For the operation of the thermal membrane machine 300 in which the enclosure 310 is at least partially filled with liquid, the temperature of the hot surface 320 is arranged to be equal to or higher than the boiling point of the liquid 313 and that the temperature of the cold surface 330 is arranged to be lower than the boiling point of the liquid.

Unlike the thermal membrane engine 100, 200 described earlier in Figures 1a, 1b, 1c and 2, the thermal membrane engine 300 in this embodiment has a hot surface 320 which faces generally downwards and a cold surface 330 which faces generally upwards, when downwards direction is the pulling direction of gravity. This is to ensure that any gas generated from boiling of the liquid 313 travels upwards and comes in thermal contact with the cold surface 330 and that at least part of the liquid of the working fluid 313 is in contact with the hot surface at all times. When the enclosure 310 is completely filled with liquid when the elastic membrane 340 is bent inwards into the enclosure 310, this requirement of inclination to be upright may be less strict.

At the point in time during the cycle of operation described in Figure 3a, a larger fraction of the working fluid 313 is within the hot space 311 than the cold space 312 because the thermal barrier 350 is positioned nearer to the cold surface 330 than to the hot surface 320. The liquid within the enclosure 310 will thermalize with the hot surface 320 and boil, shortly after the time point described by Figure 3a. Because of boiling, gas will be generated from the liquid. The gas will cause the total volume of the enclosure 310 to increase, subsequently to cause the elastic membrane 340 to bend outwards from the enclosure 310. Then the thermal barrier 350 will move closer to the hot surface, thereby screening the hot surface 320 and exposing most of the working fluid 313, mainly the gas generated the liquid, to thermalize with the cold surface 330. By being in thermal contact with the cold surface 330, the gas will condense back into liquid. This will cause the volume of the enclosure 310 to decrease, subsequently causing the elastic membrane 340 to bend inwards into the enclosure 310. This completes the cycle and brings the thermal membrane engine 300 back to the state depicted in Figure 3a.

Therefore, except for the fact that the working fluid 313 may comprise both liquid and gas, the working principle of the thermal membrane machine 300 does not differ substantially from that of the thermal membrane machines 100, 200 described above, which may only contain gas as the working fluid 313.

Using liquid as part of the working fluid 313 or using only liquid as the working fluid 313 within the enclosure 310 may increase the thermal efficiency and the power of the thermal membrane engine 300. This is because of the sharp increase and decrease of volume in the conversion of liquid into gas and vice versa. Due to the increased efficiency, the thermal membrane engine 300 may be designed to be of a smaller size than the thermal membrane engine 100, 200 operating with gas. Equivalently, due to the increased efficiency, the thermal membrane engine 300 may provide a larger power compared to the thermal membrane engine 100, 200 operating only with gas with the same or similar size.

Figure 3b shows an example of the thermal membrane engine 300, in which the enclosure 310 is filled with liquid such that the planar portion 351 of the thermal barrier 350 is above the surface of the liquid within the enclosure 310 at anytime during the cycle. The working fluid 313, 314 in this example comprises a working liquid 313 and a working gas 314.

As in the example shown in Figure 3a, the hot surface 320 faces generally downwards and the cold surface 330 faces generally upwards, when downwards direction is the pulling direction of gravity, to ensure that any gas generated from boiling of the working liquid 313 travels upwards to be in thermal contact with the cold surface 330 and that the working liquid 313 is in contact with the hot surface 320 at all times.

The thermal membrane engine 300 as shown in Figure 3b may operate in two ranges. When the temperature of the hot surface 320 is above the boiling point of the working liquid 313, and the temperature of the cold surface 330 may be below the boiling point of the working liquid 313. When the temperature of the hot surface 320 is below the boiling point but above the temperature of the cold surface 330, heat from the hot surface 320 is transferred to the working gas 314.

Since the thermal barrier 350 is in the gas than in the liquid, the thermal barrier 350 may experience less friction during movement.

If the working fluid 313, 314 contains only gas as described above in Figures 1 and 2, the thermal membrane machine 100, 200 may operate at a wide range of temperatures as long as the gas can expand and contract. The thermal membrane machine 300 containing liquid requires that the temperature of the hot surface is equal to or higher than the boiling point of the liquid. Therefore, although the thermal membrane machine 300 with at least partly liquid as the working fluid 313, 314 may provide a higher efficiency, the specification may be limited to situations where a thermal source with a relatively high temperature is available.

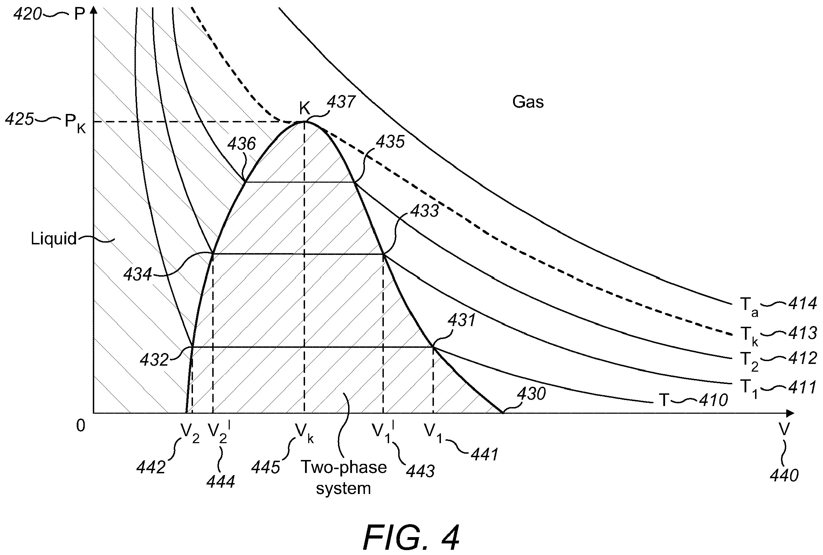

In order to meet this requirement regarding the boiling point, depending on the temperature of the thermal source to be exploited, different liquid may be chosen. The liquid used as the working liquid 313 may include one or more of water, alcohol and Freon. However, the types of liquid which can be used as the working liquid 313 are not limited to these examples. For example, if water is used as the working liquid 313, at 1 atm pressure, the boiling point is 100 degree C. Therefore, if the pressure within the enclosure 310 is maintain substantially at 1 atm, the temperature of the hot surface 320 may be maintained above 100 degrees C and the temperature of the cold surface 330 may be maintained below 100 degrees C. The implication of the boiling point and the pressure within the enclosure 310 will be explained in more detail below with Figure 4.

In order to maximise the efficiency of the thermal membrane machine 300, the temperature and volume of the working fluid 313, 314 which may include both liquid and gas, may be chosen to operate under a two-phase condition of the working fluid 313, 314.

Under the two-phase condition, the working fluid 313 may go through an isothermal process, in which the working fluid 313, 314 can change its volume as the pressure and the temperature remain constant.

Figure 4 shows a plot of a plurality of isothermal curves of a real gas-liquid system. This plot is based on a well-known theory of a real gas-liquid system and is to illustrate the effect of the two-phase condition. The real gas-liquid system refers to the mixture of a liquid and the gas generated by boiling the liquid. Therefore, the real gas-liquid system may correspond to the working fluid 313, 314 of the thermal membrane machine 300. As is well known, one of the main difference of the real gas to an ideal gas is that the real gas is compressible. In the description below, this real gas-liquid system will be called the "fluid" for convenience. The phase of the fluid, either a liquid phase or a gas phase, will be specified where necessary.

Figure 4 shows a PV phase diagram, in which a horizontal axis 440 represents volume of the fluid and the vertical axis 420 represents the pressure exerted by the fluid on the surrounding.

A plurality of curves, 410, 411, 412, 413, 414 which respectively represent the state of the fluid on the PV diagram are defined as isothermal curves, in that it traces the volume and the pressure of the fluid on the PV diagram at a constant temperature. Each of the plurality of the isothermal curves 410, 411, 412, 413, 414 corresponds to a different temperature. These curves show that a smaller volume of the fluid represents a higher pressure, except that the isothermal curves 410, 411, 412, 413 exhibit a plateau-like region where a constant pressure is maintained regardless of the volume. The fluid falling into this region satisfies the two-phase condition. This will be explained in more detail below.

The topmost isothermal curve 414, which represents a pure gas phase, does not show a plateau-like region but shows a monotonously decreasing pressure with increasing volume. This behaviour is closer to that of an ideal gas, where the product of the pressure and the volume of the fluid remains substantially constant.

Three isothermal curves, 410, 411, 412 from the bottom show a plateau-like region, where the two-phase condition is satisfied.

In order to illustrate the concept of the two-phase condition, the bottommost isothermal curve 410 will be followed from the right hand side to the left hand side of the diagram, in other words, as the volume is decreased, as below.

Starting from the right hand side of the curve, as the volume decreases, the pressure slowly rises until the point 431. Here the fluid is in the form of gas. The gentle slope of this rise, in particular gentle compared to that of the ideal gas, relates to compressibility of the real gas. As the volume decreases further while maintaining the temperature, the gas reaches a dew point 431, where the first drop of liquid forms within the gas. From the dew point 431, the fluid enters the two-phase condition in which the pressure and the temperature remain constant while the volume of the fluid decreases. Under two-phase condition, the fluid contains the mixture of the liquid and the gas. The two-phase condition continues with decreasing volume until the fluid reaches a bubble point 432. The bubble point 432 is where the fluid comprises mostly liquid and only small bubbles of gas are left within the liquid. If the volume is further decreased, the fluid enters a liquid state and shows a steep increase in pressure. Since a liquid is generally harder to compress, decreasing volume of the liquid phase of the fluid leads to a steep increase in pressure.

The next isothermal curves 411, 412 which represents a gradually higher temperature of the fluid than that of the bottommost isothermal curve 410, also shows a similar behaviour with their respective dew points 433, 435 and bubble points 434, 436.

The isothermal curve 413 is unique in the sense that its dew point and bubble point are one and the same point 437 in the PV diagram. Therefore, this isothermal curve 413 does not show a plateau like region, but in its place an inflection point, where the curvature of the isothermal curve 413 changes. This point is called a critical point 437.

By gradually changing the temperature, the corresponding dew points 430, 431, 433, 435 of the respective isothermal curves may be identified. When these points are connected up to the critical point 437, the line formed defines a boundary between the two phase condition and the gas phase of the fluid.

Similarly, by gradually changing the temperature, the corresponding bubble points 432, 434, 436, 435 of the respective isothermal curves may be collected. When these points are connected up to the critical point 437, the line formed defines a boundary between the two-phase condition and the liquid phase of the fluid.

The isothermal curve 413 traversing the critical point 437, for the volume of the fluid smaller than the volume of the fluid 445 at critical point 437, defines a boundary between the liquid phase and the gas phase of the fluid, for the fluid with volume smaller than that at the critical point 437.

When the fluid is compressed under the two-phase condition from the dew point 431, 433, 435 to the bubble point 432, 434, 436 while maintaining a constant temperature, the volume of the fluid changes without changing the amount of pressure on the surrounding. Therefore, compression of the fluid is performed without applying pressure. Under the two-phase condition, the working fluid 313, 314 of the thermal membrane machine 300 described in Figure 3b receives and releases energy efficiently from the surrounding.

The two-phase condition is explained only with a real gas-liquid system, where the gas and the liquid are both compressible.

In comparison, if theoretically the gas-liquid system is considered in which the gas and liquid are incompressible, the dew point 431, 433, 435 and the bubble point 432, 434, 436 will be one and the same point for each isothermal curve 411, 412, 413 and the area under the two-phase condition shown in Figure 4 corresponds simply to a line representing a collection of boiling points of respective isothermal curves 410, 411, 412, 413, 414.

Since the behaviour of the working fluid 313, 314 will be closer to that of the real gas-liquid system than the ideal gas, the term "boiling point" in the description of the thermal membrane machine 100, 200, 300 may be understood in the context of the real gas-liquid system. In other words, when the fluid is at a boiling point, it will be understood in this specification to mean that the fluid is under the two-phase condition.

Therefore, the thermal membrane machine 300 with liquid as the working fluid 313 may operate under the two-phase condition, in other words, within the PV phase diagram of Figure 4, under the curve defined by the dew points 430, 431, 433, 435, the critical point 437, and the bubble points 436, 434, 432.

By operating the thermal membrane machine 300 with liquid as the working fluid 313 under the two-phase condition, a large change of volume of the enclosure 310 may be achieved without applying any pressure and at a constant temperature. Therefore, the operation of the thermal membrane machine 300 may approach an ideal Carnot cycle.

In the thermal membrane machine 300 with liquid as the working fluid 313, 314 under the two-phase condition, the operating condition under the two-phase condition may be found empirically by trial and error, however guided by the phase diagram shown in Figure 4. As explained above, the spatial temperature distribution within the enclosure 310 of the thermal membrane machine may be uneven and may change in time, given that the enclosure comprises the hot surface 320 and the cold surface 330, which as a result form a temperature gradient within the enclosure 310 and that the thermal barrier 350 is constantly moving to rearrange the temperature profile.

Therefore, the operating temperature within the working fluid 313, 314 within the enclosure 310 may be determined to be below the temperature of the isothermal curve 414 traversing the critical point 437. The temperature of the hot surface 320 and the cold surface 330 may be determined accordingly.

The largest and the smallest volume of the enclosure 310 may be determined such that the volume of the fluid falls within the two-phase condition at the determined temperature. For example, the maximum volume may be set to be V1 441 and the lowest volume may be set to be V2 432. The volume of the enclosure 310, and the amount of the working liquid 313 may be determined accordingly.

The characteristic of the elastic membrane 340 may be determined according to the desired maximum and minimum volume. As described above in Figure 2, one or more spring 270 may be used to tune the characteristic of the elastic membrane 340 such that the thermal membrane machine 300 operates under the two-phase condition.

Therefore, the operating temperature and the volume of the enclosure 310 are determined according to the type of the working fluid 313, 314. The characteristic of the working fluid 313, 314 such as the boiling point, the latent heat, and the thermal capacity may be determined accordingly to operate under the two-phase condition.

Therefore, the operating condition which satisfies the two-phase condition may be found by optimising the efficiency of the operation.

If the working fluid 313, 314 is under the two-phase condition, for a wide range of volumes, the working fluid 313, 314 is "boiling" in that bubbles will constantly from within the working fluid 313. This may cause unwanted mechanical vibration of the enclosure 310, which may affect the movement of the elastic membrane 340 and the thermal barrier 350.

In order to mitigate this unwanted mechanical vibration, the level of the liquid of the working liquid 313 may be determined to be below the planar portion 351 as shown in Figure 3b. Even in this case, the bubbles forming will be in the hot space 111 and the shock wave generated from the formation of the bubbles may affect the movement of the thermal barrier 350. Therefore, the planar portion 351 may be made of a material which is efficient in thermal insulation but permeable to liquid. For example, the planar portion 351 may be made of a vortex membrane or a fine grid of thermally insulating material.

So far, the working principle of the thermal membrane machine 100, 200, 300 have been described. For the rest of the specification, examples of specific configurations of the thermal membrane machine 100, 200, 300 in which the thermal energy provided to the thermal membrane machine 100, 200, 300 is turned into mechanical energy and electric energy.

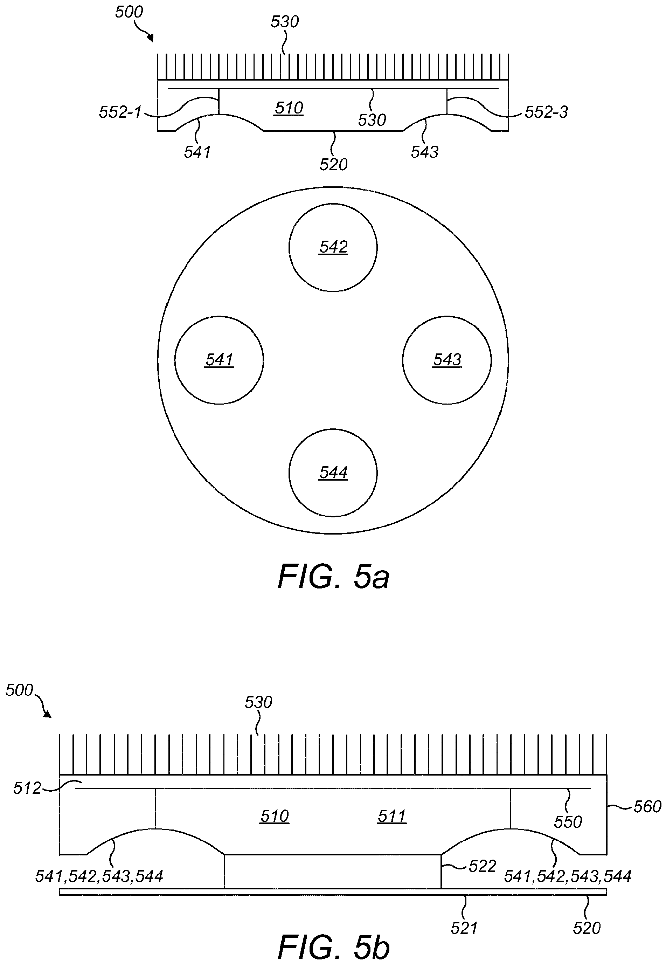

Figures 5a and 5b show an example of the thermal membrane machine 500 which includes four elastic membranes 541, 542, 543, 544.

The thermal membrane machine 500 further comprises a hot surface 520, a cold surface 530, a thermal barrier 550 including a planar portion 551 and four connecting portions 552-1, 552-2, 552-3, 552-4, respectively connecting the planar portion 551 to the four elastic membranes 541, 542, 543, 544, respectively, and a heat-insulating wall 560. The hot surface 520, the cold surface 530, the elastic membranes 541, 542, 543, 544 and the heat-insulating wall 560 form an enclosure 310, which is an airtight vessel. These elements are identical to those described in Figures 1a, 1b, 1c, 2, 3a and 3b.

Figure 5a shows that the four elastic membranes 541, 542, 543, 544 may be formed on the hot surface 520.

Although the example shown in Figures 5a and 5b show four elastic membranes 541, 542, 543, 544, but the number of the elastic membranes 541, 542, 543, 544 are not limited to four. The number of the elastic membranes 541, 542, 543, 544 may be two or more.

The advantage of having more than one elastic membranes 541, 542, 543, 544 sharing one enclosure 510 and one thermal barrier 550 may be that compared to the case where there is only one elastic membranes, the mechanical stability in the movement of the thermal barrier 550 may be improved.

Therefore, to improve the mechanical stability in the movement of the thermal barrier 550, the elastic membranes 541, 542, 543, 544 may be preferably disposed in a symmetrical fashion in the plane of the hot surface 520. For example, as shown in Figure 5a, the boundary of the hot surface 520 is substantially circular and the elastic membranes 541, 542, 543, 544, are disposed along the circular boundary of the hot surface 520 at an equal angular interval, which is 90 degrees in this case of four elastic membranes 541, 542, 543, 544.

However, as discussed before, the number of elastic membranes 541, 542, 543, 544 is not limited to four. In case other number of elastic membranes 541, 542, 543, 544 is to be used, they may be arranged on the hot surface 520 such that the transverse rocking of the thermal barrier 550 is minimised during the operation of the thermal membrane machine 500.

Figure 5b shows a side view of the thermal membrane machine 500.

Often the source of thermal energy may be in the form which is not convenient to thermally contact the hot surface 520. The thermal source may be a wide surface whose area is much than that of the hot surface 520 of the thermal membrane machine 100, 200, 300, 500, in particular the hot surface 120, 220, 320, 520. In order to maximise the intake of the thermal energy from an arbitrary surface, the hot surface 520 may comprise a reception surface 521 and a thermal bridge 522, which is made of a thermally conducting material.

The reception surface 521 may be arranged to be substantially planar or to conform to the surface of the thermal source to be exploited. The area and the shape of reception surface 521 may be arranged to maximise the channelling of the thermal energy from the thermal source.

The thermal bridge 522 may be arranged to transfer the heat collected by the reception surface 521 to the surface of the enclosure 510. The thermal bridge 522 may be arranged to be in contact with the surface of the enclosure 510 or form a surface of the enclosure 510. In order to maximise the efficiency of the thermal membrane machine 500, the height of the thermal bridge 522 may be determined to be large enough to allow a space for the movement of the elastic membranes 541, 542, 543, 544 but short enough to ensure a good thermal conduction between the reception surface 521 and the enclosure 510. The lateral dimension of the thermal bridge 522 may be chosen considering the lateral temperature distribution in the hot space 511, such that a controllable operation of the thermal membrane machine 500 is possible.

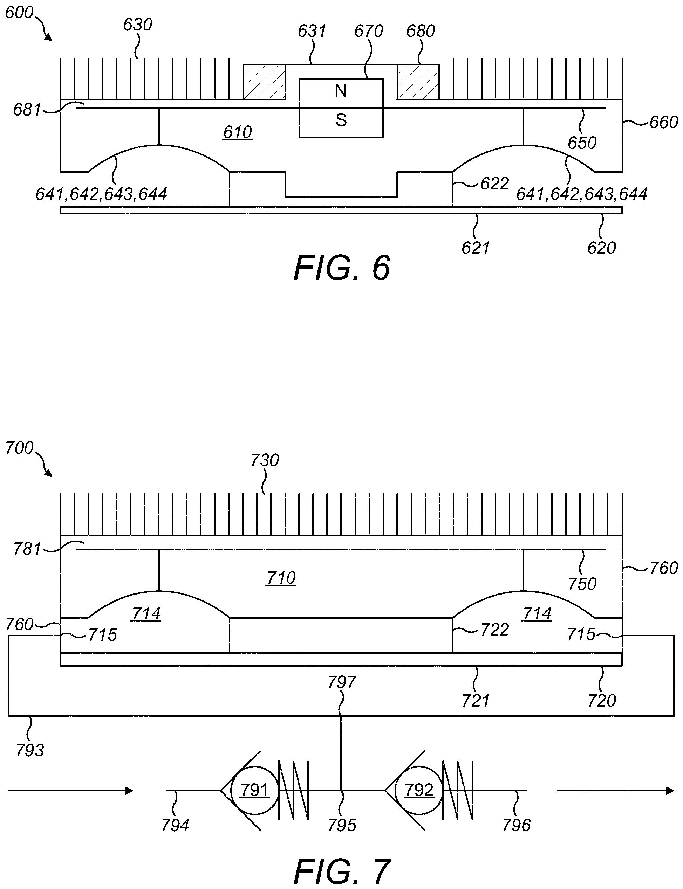

Figure 6 shows an example of the thermal membrane machine 600 in which an electric generator is installed to convert the thermal energy into electric energy. The thermal membrane machine 600 further comprises a magnet 670 and a coil 680. In the example shown in Figure 6, the magnet 670 is attached to the planar portion 681 of the thermal barrier 680 and the coil 680 is attached to the cold surface 630. The shape of the cold surface 630 is arranged such that the cold surface has a protrusion 631, which protrudes towards outside of the enclosure 610. The coil 680 is wound around the external surface of the protrusion 631. In other words, the solenoid is not inside the enclosure 610. Inside the enclosure 610, the protrusion 631 provides a space for movement of the magnet 670 such that when the elastic membranes 641, 642, 643, 644 are bent inwards, the magnet 670 is inserted into the solenoid 680.

As is well known, the relative movement between the magnet 670 and the coil 680 will generate a current flowing through the coil 680 and the magnitude of the current will be proportional to the windings of the coil 680 and the velocity of the magnet 670.

The hot surface 620, in particular the shape of the thermal bridge 622 may be arranged such that the hot surface accommodates the downwards movement of the magnet 670, when the hot space 611 is minimised. In the example of Figure 6, the shape of the thermal bridge 622 is designed such that the magnet 670 has enough room for travel when the elastic membranes 641, 642, 643, 644 are bent outwards.

However, the design of an electric generator is not limited to the example of the Figure 6. For example, if the temperature within the enclosure 610 is high enough to affect the properties of the magnet 670, the magnet 670 may be disposed outside the enclosure 610 near the cold surface 630. The coil 680 may be attached to the thermal barrier 650 inside the enclosure 610. In this case, the current generated in the coil 680 can be connected to an electric load by passing a connecting wire interfaced through a heat insulating wall 660 in a way that the sealing of the enclosure is maintained. The coil 680 may comprise an insulation coating, such as plastic.

For another example, the magnet 670 may be an electromagnet, comprising a coil connected to a power source.

As long as the relative movement between the magnet 670 and the coil 680 are arranged by the movement of the elastic membranes 641, 642, 643, 644 and the thermal barrier 680, an electric generator may be implemented within the thermal membrane machine 600.

The solenoid 680 may be preferably attached to the external surface of the cold surface, outside of the enclosure 610. This is because the electric load to which the generated electric energy may be applied to will be the outside of the thermal membrane machine 600, and it is more convenient to dispose the solenoid 680 outside of the thermal membrane machine 680. Also current generated within the enclosure 610 may cause problems in contact with the fluid within the enclosure 610.

The thermal membrane machine 600 in this example may be used for heat recovery and conversion. For example, electrical components such as a motor or an inverter may heat up during operation. This may be used as a heat source coupled to the hot surface 621, 622. Using the thermal membrane machine 600, this heat may be converted back into electricity, which can consequently be provided to a battery used to operate the electrical components.

Figure 7 shows an example of the thermal membrane machine 700 in which the movement of the elastic membranes 741, 742, 743, 744 is used to implement a hydraulic pump.

The thermal membrane machine 700 further comprises a hydraulic enclosure 714. The hydraulic enclosure 714 is formed by the hot surface 720, the elastic membranes 741, 742, 743, 744 and the extension of the heat insulating wall 760.

The volume of the hydraulic enclosure 714 is arranged to change according to the movement of the elastic membranes 741, 742, 743, 744. For example, when the elastic membranes 741, 742, 743, 744 are bent outwards from the enclosure 710, the volume of the hydraulic enclosure 714 decreases.

Alternatively, the hydraulic enclosure 714 may be any enclosure which is arranged to change its volume according to the movement of the elastic membranes 741, 742, 743, 744. Therefore, part of at least one surface of the hydraulic enclosure 714 may be formed by the elastic membranes 741, 742, 743, 744 of the thermal membrane machine or elastic membranes whose movement is coupled to the movement of the elastic membranes 741, 742, 743, 744 of the thermal membrane machine.

The thermal membrane machine 700 further comprises a first one-way valve 791 and a second one-way valve 792. The output of the first one-way valve 791 and the input of the second one-way valve 792 are connected to one another via a first three-way connection 795. The port of the first three-way connection 795 which is not connected to the first one-way value 791 and the second one-way valve 792 is connected to a first port of a second three-way connection 797.

The hydraulic enclosure 714 comprises an aperture 715. In the example shown in Figure 7, the hydraulic enclosure 714 includes two apertures 715. The apertures 715 are connected to a second port and a third port of the second three-way connection 797 via a tubing.

This arrangement provides a hydraulic pump capable of pumping fluid from an input 794 of the first one-way valve 791 to an output 796 of the second one-way valve 792, as indicated by the arrows.

When the elastic membranes 741, 742, 743, 744 are bent inwards into the enclosure 710, the fluid is drawn into the input 794 of the first one-way valve 791. Due to the direction of the flow of the fluid caused by the elastic membranes 741, 742, 743, 744, the second one-way valve 792 closes down and acts as a barrier. The fluid drawn from the first one-way valve 791 is further drawn into the hydraulic enclosure 714.

When the elastic membranes 741, 742, 743, 744 are bent outwards, away from the enclosure 710, the fluid is pushed out of the output 796 of the second one-way valve 792. Due to the direction of the fluid, the first one-way valve 791 blocks the flow of the fluid towards the input port of the first one-way valve 791, effectively acting as a block.

Therefore, owing to the use of the two one-way valves 791, 792, the direction of pumping of the fluid is always from the input 794 of the first one-way valve 791 to the output 796 of the second one-way valve 792, as indicated by the arrows.

The working fluid within the enclosure 710 of the thermal membrane machine 700 and the fluid to be pumped from the input 794 to the output 796 may not be the same.

The hydraulic enclosure 714 may be initially filled with liquid to be pumped such that the pumping action is more efficient.

Therefore, the thermal membrane machine 700 may function as a hydraulic pump activated by thermal energy.

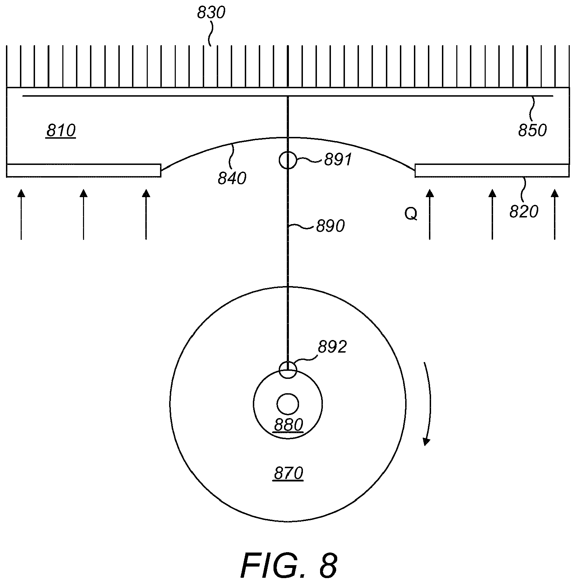

Figure 8 shows an example of the thermal membrane machine 800 in which a wheel or a disc 870 and a crank 890 are installed to convert thermal energy into mechanical energy. The thermal membrane machine 800 further comprises a shaft 880 about which the disc 870 rotates. The crank 890 is rotatably attached to a portion of the elastic membrane 840 via a first pivot 891 and rotatably attached to the disc 870 via a second pivot 892.

When heat is provided to the hot surface 820 such that a temperature difference forms between the hot surface 820 and the cold surface 830, the elastic membrane 840 may be periodically bent inwards and outwards from the enclosure 810. As a result, the portion of the elastic membrane 840 to which the first pivot 891 is attached may follow a reciprocal motion or a linear sliding motion in the direction of upwards and downwards in Figure 8. This direction of the linear reciprocal motion is chosen only for illustration, and the operation of the thermal membrane machine 800 in this example is irrespective of the direction of gravity.

When the elastic membrane 840 is bent inwards, the crank 890 may be pulled upwards, and when the elastic membrane 850 is bent downwards, the crank 890 may be pushed downwards. This generates a rotational motion of the disc 870 about the shaft 880.

The thermal membrane machines 100, 200, 300, 500, 600, 700, 800 described in this specification are capable of converting thermal energy into mechanical energy, which is provided in the form of reciprocation motion of the elastic membranes 140, 240, 340, 541, 542, 543, 544, 641, 642, 643, 644, 741, 742, 743, 744, 840. The reciprocation motion provided by the thermal membrane machines 100, 200, 300, 500, 600, 700, 800 can be a source of any mechanism utilising reciprocation motion. For example, instead of the mechanical connections as presented in Figure 8, the mechanical energy can be transmitted via magnets.

The thermal membrane machines 100, 200, 300, 500, 600, 700, 800 described in this specification allows for a simple design which requires only a small number of moving parts, the elastic membranes 140, 240, 340, 541, 542, 543, 544, 641, 642, 643, 644, 741, 742, 743, 744, 840. This design is a closed system and does not require any components which engage with each other by friction, which largely removes the need for maintenance. Compared to the conventional Stirling engines, the thermal membrane machines 100, 200, 300, 500, 600, 700, 800 described in this specification does not have a regenerator and does not operate with a flywheel.

It may be possible to build a thermal membrane machine with high efficiency with small size. In particular, a very thin design of a thermal engine may be possible.

The embodiments of the invention shown in the drawings and described above are exemplary embodiments only and are not intended to limit the scope of the invention, which is defined by the claims hereafter. It is intended that any combination of non-mutually exclusive features described herein are within the scope of the present invention.

## Claims

1. An apparatus comprising:
an enclosure formed at least by:
an elastic membrane;
a first region;
a second region;
the apparatus further comprising:
a displacer disposed within the enclosure, arranged to move with the elastic membrane through a plurality of positions and to be substantially thermally insulating;
a fluid within the enclosure,
wherein the first region is thermally connectable to a first external thermal source and arranged to transfer heat from the first external thermal source to an interior of the enclosure,
wherein the second region is thermally connectable to a second external thermal source and arranged to transfer heat from the interior of the enclosure to the second external thermal source, a temperature of the second external thermal source being lower than a temperature of the first external thermal source, and
wherein the elastic membrane and the displacer are arranged to move such that a volume of the fluid exposed to the first region is decreased in response to an increase of a temperature of the fluid and such that a volume of the fluid exposed to the first region is increased in response to a decrease of the temperature of the fluid.

2. The apparatus of claim 1,
wherein the elastic membrane is arranged to take a shape such that a volume of the enclosure is decreased in response to the decrease of the temperature of the fluid, and such that the volume of the enclosure is increased in response to the increase of the temperature of the fluid.

3. The apparatus of claim 1 or 2,
wherein the displacer comprises:
a planar portion; and
a connecting portion,
wherein the planar portion is arranged to substantially cover a transverse cross section of the enclosure, and
wherein the connecting portion is arranged to attach the planar portion to a portion of the elastic membrane such that the planar portion moves with the portion of the elastic membrane,
optionally wherein the elastic membrane and the first region are arranged to face a first side of the planar portion and the second region is arranged to face a second side of the planar portion, such that:
when the volume of the fluid is increased, the planar portion is closer to the first region than to the second region, and
when the volume of the fluid is decreased, the planar portion is closer to the second region than to the first region.

4. The apparatus of claim 3,
wherein the apparatus comprises one or more additional elastic membranes, and
wherein the displacer comprises one or more additional connecting portions for respective ones of the additional elastic membranes.

5. The apparatus of any preceding claim,
wherein the elastic membrane is arranged to take a predetermined number of shapes, such that the elastic membrane provides a force to maintain one of the predetermined shapes against the decrease or the increase of the temperature of the fluid,
optionally wherein the one or more additional elastic membranes are arranged to take the predetermined number of shapes, such that the one or more additional elastic membranes provide a force to maintain one of the predetermined shapes against the decrease or the increase of the temperature of the fluid.

6. The apparatus of any one of claim 1 to 5,
wherein the elastic membrane is arranged to stretch and contract continuously in response to the decrease or the increase of the temperature of the fluid, such that the elastic membrane provides a restoring force to return to an unstretched state of the elastic membrane,
optionally wherein the one or more additional elastic membranes are arranged to stretch and contract continuously in response to the decrease or the increase of the temperature of the fluid, such that the one or more additional elastic membranes provide a restoring force to return to an unstretched state of the one or more elastic membranes.

7. The apparatus of any preceding claim,
wherein the fluid comprises a gas.

8. The apparatus of any preceding claim,
wherein the fluid comprises a liquid,
optionally wherein the fluid is under a two-phase condition.

9. The apparatus of claim 8,
wherein the enclosure is substantially full of the liquid when the volume of the fluid is minimised.

10. The apparatus of claim 8,
wherein the enclosure is partially filled with liquid when the volume of the fluid is minimised.

11. The apparatus of any preceding claim,
wherein the first region comprises:
a reception region arranged to be thermally contacted to a thermal bridge and arranged to transfer heat from the thermal bridge to the interior of the enclosure; and
a thermal bridge arranged to thermally connect the reception surface and the first external thermal source.

12. An electric generator, comprising:
the apparatus of any preceding claim,
a coil disposed on the outside of the enclosure and connectable to an electric load; and
a magnet attached to the displacer,
wherein the enclosure is arranged such that the magnet is inserted into the solenoid at least at one of the positions.

13. The electric generator of claim 12,
wherein the apparatus is of any one of claims 3 to 4 or any one of claims 5 to 11 depending on any one of claims 3 to 4,
wherein the magnet is attached to the planar portion of the displacer, and
wherein the enclosure further comprises a protrusion on the second region and the coil is wound around the protrusion such that at the one of the positions, the magnet is inserted into the protrusion and the coil.

14. A hydraulic pump, comprising:
the apparatus of any one of claims 1 to 11,
a first one-way valve;
a second one-way valve;
a hydraulic enclosure disposed outside the enclosure,
wherein a surface of the hydraulic enclosure is formed at least partly by the elastic membrane such that a volume of the hydraulic enclosure changes with movement of the elastic membrane,
wherein an output of the first one-way valve is connected to a first port of a three-way connector, and a second port of the three-way connector is connected to an input of the second one-way valve,
wherein a third port of the three-way connector is connected to the hydraulic enclosure, and
wherein an input of the first one-way valve is connectable to a suction side reservoir and an output of the second one-way valve is connectable to a discharge side reservoir.

15. An engine, comprising:
the apparatus of any one of claims 1 to 11,
a wheel arranged to rotate around a shaft;
a crank rotatably attached to a portion of the elastic membrane via a first pivot and rotatably attached to the wheel via a second pivot.
